# EUROPÄISCHE PATENTSCHRIFT

(11) **EP 0 893 681 B1**
(45) Veröffentlichungstag und Bekanntmachung des Hinweises auf die Patenterteilung: **10.09.2003**
(21) Anmeldenummer: 98113149.3
(22) Anmeldetag: 15.07.1998
(51) Int. Cl.: G01N 1/12, G01N 1/14, G01N 25/04

(54) **Probennehmer für Metallschmelzen**
Sampling device for molten metals
Dispositif de prise d'échantillon de métal en fusion

(30) Priorität: 24.07.1997 DE 19731830
(43) Veröffentlichungstag der Anmeldung: 27.01.1999
(73) Patentinhaber: Heraeus Electro-Nite International N.V., 3530 Houthalen (BE)
(72) Erfinder: Knevels, Johan, 3690 Bre (BE); Mingneau, Frank, 3520 Zonhoven (BE)
(74) Vertreter: Kühn, Hans-Christian

(56) Entgegenhaltungen:
- EP-A- 0 107 219
- US-A- 3 583 236
- US-A- 4 037 478
- US-A- 4 487 082
- US-A- 4 535 640
- US-A- 4 699 014
- PATENT ABSTRACTS OF JAPAN vol. 095, no. 008, 29. September 1995 & JP 07 120455 A (DAIDO STEEL CO LTD), 12. Mai 1995
- PATENT ABSTRACTS OF JAPAN vol. 097, no. 005, 30. Mai 1997 & JP 09 021795 A (KAWASOU DENKI KOGYO KK), 21. Januar 1997

## Beschreibung

Die Erfindung betrifft einen Probennehmer für Metallschmelzen, insbesondere für Gußeisen- oder Roheisenschmelzen, mit einer in einem feuerfesten, an einem Träger gehalterten Körper angeordneten Probenkammer, die an zwei gegenüberliegenden Wänden von je einer metallischen Kühlplatte (Metallplatte) begrenzt ist und an einer weiteren Wand mindestens eine Einlauföffnung für Metallschmelze aufweist.

Derartige Probennehmer sind beispielsweise aus der EP 0 107 219 A1 bekannt. Diese Probennehmer sind geeignet zur Probennahme insbesondere von Stahlschmelzen. Die damit gewonnenen Proben sind scheibenförmig und üblicherweise mindestens 4 mm dick. Die Metallplatten dienen unter anderem einer raschen Abkühlung der Probe. Eine ähnliche Anordnung ist aus DE 34 02 818 A1 bekannt. Hier sind in einer Probenkammer eines Probennehmers plattenförmige Kühlelemente beabstandet zur Wand der Probenkammer angeordnet und mittels Befestigungselementen (Schrauben) an der Wand gehaltert. US 3 824 837 offenbart eine Meßkammer zur Aufnahme der Solidus- oder Liquiduskurve, in welcher Kühlelemente angeordnet sind, die sich in der einlaufenden Metallschmelze auflösen.

Beispielsweise bei Gußeisenschmelzen, die einen relativ hohen Kohlenstoffgehalt aufweisen, ist die sogenannte Weißerstarrung für eine zuverlässige Analyse, z. B. Spektralanalyse, erwünscht, da bei der Weißerstarrung der in der Schmelze erstarrte Kohlenstoff während der Erstarrung nicht ausgefällt wird. Um eine möglichst ideale Weißerstarrung zu erhalten, ist eine rasche Probenabkühlung erforderlich, d. h. die Probe selbst muß möglichst dünn sein. In modernen Stahlwerken werden Proben automatisch analysiert. Dabei werden die Proben von Robotergreifern erfaßt und transportiert. Diese Greifer erfassen die scheibenförmigen Proben an ihren Schmalseiten. Die dabei auf die Proben ausgeübte Kraft des Greifers kann jedoch Proben, die zu dünn sind, verformen. Es besteht also in der Praxis ein Widerspruch zwischen der für eine ideale Weißerstarrung erforderlichen möglichst geringen Probendicke einerseits und dem Erfordernis einer für die Probenbearbeitung notwendigen minimalen Stabilität der Probe andererseits. Die aus dem Stand der Technik bekannten Probennehmer erzeugen stets Proben, deren Dicke einen Kompromiß zwischen den beiden für die Analyse von Gußeisenproben bestehenden Erfordernissen darstellt.

Aufgabe der vorliegenden Erfindung ist es, ausgehend von dem beschriebenen Stand der Technik einen Probennehmer zu schaffen, mit dem Proben gewonnen werden, die eine möglichst sehr gute Weißerstarrung aufweisen, die aber gleichzeitig die zu einer automatisierten Probenanalyse notwendige Festigkeit aufweisen.

Diese Aufgabe wird für den eingangs beschriebenen Probennehmer dadurch gelöst, daß im Innenraum der Probenkammer auf mindestens einer der beiden metallischen Kühlplatten (Metallplatten) eine weitere Metallscheibe lösbar angeordnet ist, deren Durchmesser kleiner ist als der Durchmesser der Probennahmekammer und deren Dicke kleiner ist als die Dicke der Probennahmekammer. Besonders zweckmäßig ist es, daß die Metallscheibe konzentrisch in einer kreisförmigen Probenkammer angeordnet ist. Die in einer derartigen Probenkammer gewonnenen Metallproben weisen am Rand eine Dicke auf, die der Dicke der Probenkammer entspricht und in dem zu analysierenden Teil eine Dicke, die der Differenz zwischen der Dicke der Probenkammer und der Dicke der Metallscheibe entspricht. Diese Differenz kann nahezu beliebig gering gehalten werden, so daß in dem zu analysierenden Teil der Probe eine sehr gute Weißerstarrung erfolgen kann. Gleichzeitig ist die Probe an den Rändern dick genug, um die zur automatischen Bearbeitung notwendige Stabilität aufzuweisen. Die Metallscheibe bildet nach dem Heraustrennen der Probe aus der Probennahmekammer praktisch einen Bestandteil der Probe und verbessert zusätzlich die Stabilität während der automatischen Handhabung. Vor der Probenanalyse kann die Probe in ihrem dünnen Bereich aufgetrennt werden; dabei wird die Metallscheibe entfernt.

Zweckmäßig ist es, daß die nicht von Metallische Kühlplatten begrenzten Wände der Probennahmekammer während der Probennahme eine gasdurchlässige Struktur aufweisen, um den in der Probennahmekammer vorhandenen Gasen beim Einströmen der Metallschmelze das Verlassen der Probennahmekammer zu ermöglichen, so daß Gaseinschlüsse in der Probe verhindert werden.

Vorteilhaft für einen einfachen Aufbau ist es, daß an genau einer die Probennahmekammer begrenzenden metallischen Kühlplatte eine Metallscheibe angeordnet ist. Weiterhin ist es zweckmäßig, daß die Metallscheibe aus Kupfer, Eisen oder Stahl gebildet ist.

Als vorteilhaft hat es sich weiterhin erwiesen, daß die Dicke der Metallscheibe etwa 3 - 5 mm geringer ist als die Dicke der Probenkammer. Es sind jedoch auch andere Dickenverhältnisse durchaus denkbar.

Zweckmäßigerweise weist die Metallscheibe an ihrem dem Inneren der Probennahmekammer zugewandten Rand eine Schräge auf. Diese Schräge verhindert eine Wirbelbildung beim Einlaufen der Metallschmelze in die Probennahmekammer, so daß Lufteinschlüsse vermieden werden und die Probennahmekammer vollständig gefüllt wird. Die Schräge liegt der Einlauföffnung gegenüber; sie kann um den gesamten, dem Inneren der Probennahmekammer zugewandten Rand herum verlaufen. Statt einer Schräge, die häufig auch als Fase bezeichnet wird, kann der Rand der Metallscheibe eine Rundung aufweisen, das heißt, abgerundet sein.

Es kann sich als vorteilhaft erweisen, daß die Metallscheibe an ihrem an die Wand der Probennahmekammer angrenzenden Rand eine Hinterschneidung aufweist, die beispielsweise ebenfalls als Schräge oder als Rundung ausgebildet sein kann. Eine solche Hinterschneidung führt dazu, daß die in der Probennahmekammer gebildete Probe die Metallscheibe teilweise umgreift und deren sicheren Halt innerhalb der Probe gewährleistet.

Innerhalb des Körpers kann eine weitere Probennahmekammer angeordnet sein, die beispielsweise stabförmig ausgebildet ist und zur Entnahme einer Stiftprobe dient. Dadurch ist es möglich, gleichzeitig zwei Proben für unterschiedliche Analysen zu entnehmen.

Im folgenden wird ein Ausführungsbeispiel der Erfindung anhand einer Zeichnung näher erläutert. In der Zeichnung zeigt
- Figur 1: einen Probennehmer im Querschnitt
- Figur 2: einen Probennehmer mit abgeschrägter Metallscheibe
- Figur 3: einen Probennehmer mit abgerundeter Metallscheibe
- Figur 4: einen Probennehmer mit hinterschnittener Metallscheibe
- Figur 5: einen weiteren Probennehmer mit hinterschnittener Metallscheibe
- Figur 6: eine weitere Ausführungsform eines Probennehmers.

Der Probennehmer weist einen feuerfesten Körper 1 auf, der an einem Papprohr.2 gehaltert ist. Der feuerfeste Körper 1 kann entweder in das Ende des Papprohres 2 hineingesteckt oder auf dieses Papprohr 2 aufgesteckt sein, so daß der feuerfeste Körper 1 das Papprohr 2 an seiner Außenseite umfaßt. Quer zur Längsachse des Papprohres 2 ist eine scheibenförmige Probennahmekammer 3 in dem feuerfesten Körper 1 angeordnet. Die Probennahmekammer 3 weist einen kreisförmigen Querschnitt auf; ihre zwei einander gegenüberliegenden ebenen Wände sind von metallischen Kühlplatten 4 gebildet. Die Schmalseite der Probennahmekammer 3, eine Zylindermantelfläche, ist aus dem gasdurchlässigen Material des feuerfesten Körpers 1 gebildet. Dieses Material ist beispielsweise Gießereisand. Auch andere geeignete Materialien sind bekannt. Eine Einlauföffnung 5 mündet in die Schmalseite der Probennahmekammer 3.

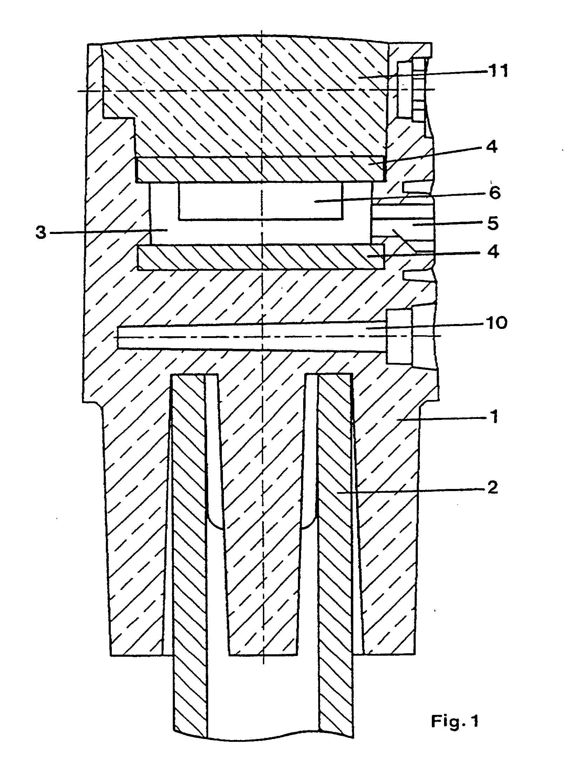

An einer der beiden metallischen Kühlplatten 4 ist eine Metallscheibe 6 aus Kupfer oder Eisen lösbar angeordnet; beispielsweise geklebt (Fig. 1). Die dadurch gebildete Probennahmekammer 3 weist in der Praxis häufig einen Durchmesser von 35 mm und eine Gesamtdicke von etwa 8 mm auf. Es sind jedoch auch andere Abmessungen üblich. Die Metallscheibe 6 hat eine Dicke von etwa 4 mm, so daß der zu analysierende Probenteil ebenfalls eine Dicke von etwa 4 mm aufweist. Eine derartige Dicke der Probe ist sehr gut zur Erzielung einer guten Weißerstarrung geeignet. Die Metallscheibe 6 hat im dargestellten Beispiel einen Durchmesser von etwa 25 mm.

Bei der Probennahme wird der Probennehmer in die Metallschmelze eingetaucht . Die in die Probennahmekammer 3 aufgrund des ferrostatischen Druckes einlaufende Metallschmelze füllt den tellerartigen Raum aus. Der Klebstoff wird zerstört, so daß die Probe mit der Metallscheibe 6 aus der Probennahmekammer 3 entfernt wird. Bei der Entnahme der Probe aus dem Probennehmer verbleibt die Metallscheibe 6 zunächst innerhalb des durch die tellerartige Form der Probe gebildeten Hohlraumes. Ein automatischer Greifer, der die Probe zur Bearbeitung erfaßt, kann dieses massive Teil aus Probe und Metallscheibe 6 zuverlässig erfassen, ohne daß die Probe verformt wird. Die Analysefläche der Probe (gegenüber der Metallscheibe 6) bildet eine ebene Fläche, die zur Analyse benötigt wird.

Prinzipiell ist es auch denkbar, daß die Metallscheibe 6 wenigstens teilweise den Rand der Probenkammer 3 berührt; also auch zumindest teilweise einen Randbereich der aus der Probe und der Metallscheibe 6 bestehenden Einheit bildet.

In dem Körper 1 ist eine weitere Probennahmekammer 10 zur Entnehme einer Stiftprobe angeordnet.

Zur Montage des Probennehmers wird eine der metallischen Kühlplatten 4 (zweckmäßigerweise diejenige, an der die Metallscheibe 6 angeklebt ist) von der Eintauchseite des Probennehmers her in eine entsprechende Öffnung des Körpers 1 eingesetzt, die danach mit einem feuerfesten Stopfen 11 verschlossen wird. Dadurch ist eine sehr einfache Montage möglich.

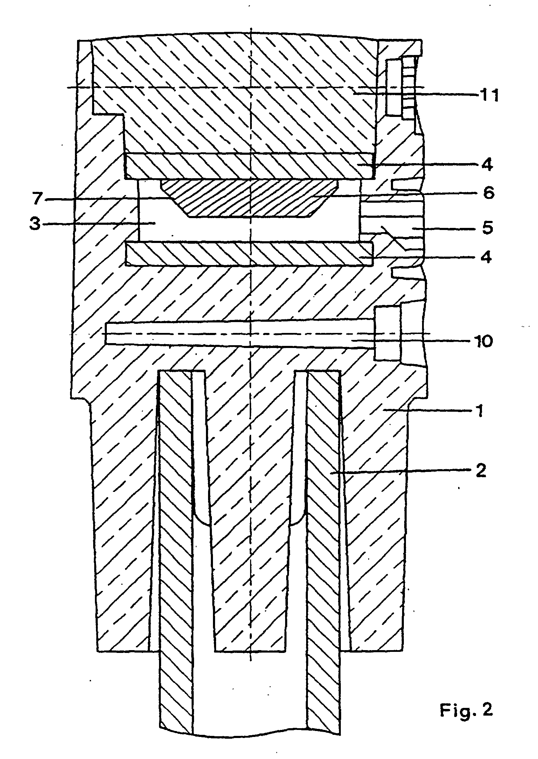

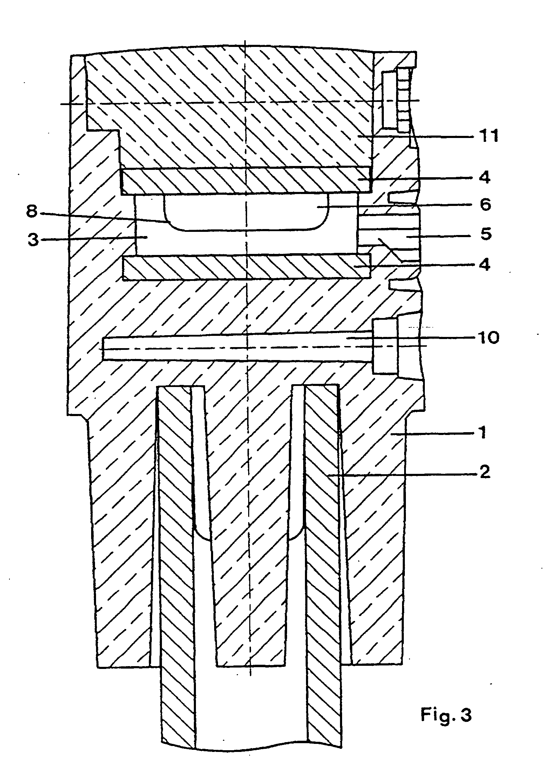

In den Figuren 2 bis 5 sind besondere Ausführungsformen des Probennehmers beispielhaft dargestellt. Die einzelnen Probennehmer unterscheiden sich durch Ausbildung der Metallscheibe 6. In Figur 2 ist eine solche Metallscheibe 6 dargestellt, die eine Schräge 7 (auch Fase genannt) aufweist. Die Schräge 7 dient der Verminderung bzw. Verhinderung von Turbulenzen innerhalb der einlaufenden Metallschmelze und damit der Verhinderung von Gasblasen innerhalb der Probe. Statt einer Schräge 7 kann eine Rundung 8 (Figur 3) an der Metallscheibe 6 angebracht sein.

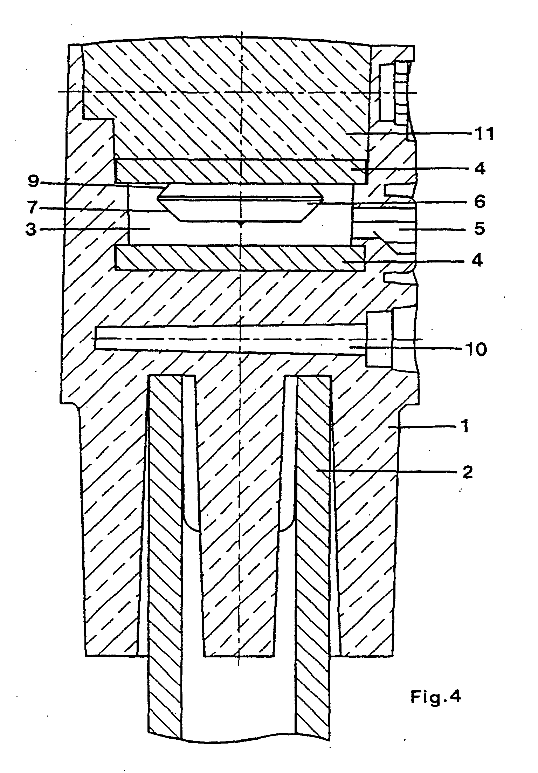

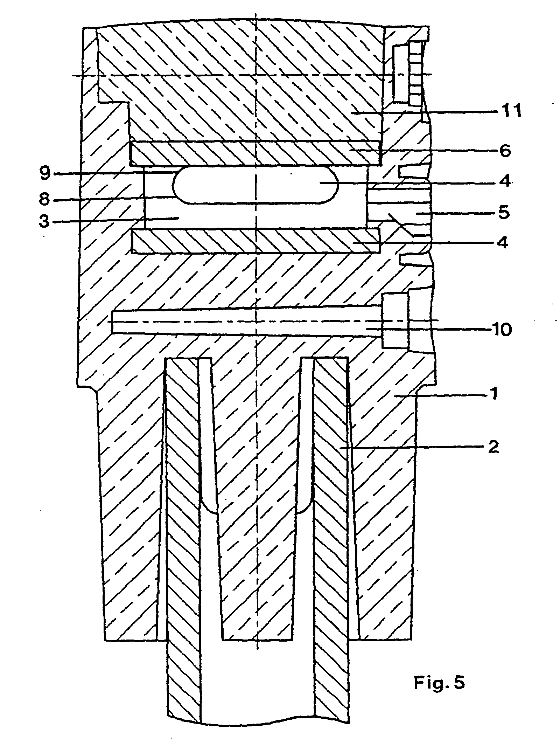

Ein besonders stabiler Halt der Metallscheibe 6 innerhalb der aus der Probennahmekammer 3 entnommenen Probe ergibt sich, wenn die Metallscheibe 6 an ihrer an der metallische Kühlplatte 4 anliegenden Seite eine Hinterschneidung 9 aufweist. Ein Herauslösen der Metallscheibe 6 aus der Probe während des Transportes oder der Anlyse der Probe ist damit unmöglich. Die in den Figuren 4 und 5 dargestellten Hinterschneidungen 9 sind lediglich beispielhaft; auch stufenförmige oder andere Hinterschneidungen 9 sind möglich. Ebenso sind außer den in den Figuren dargestellten Kombinationen mit einer Schräge 7 beziehungsweise einer Rundung 8 auch weitere Kombinationen denkbar.

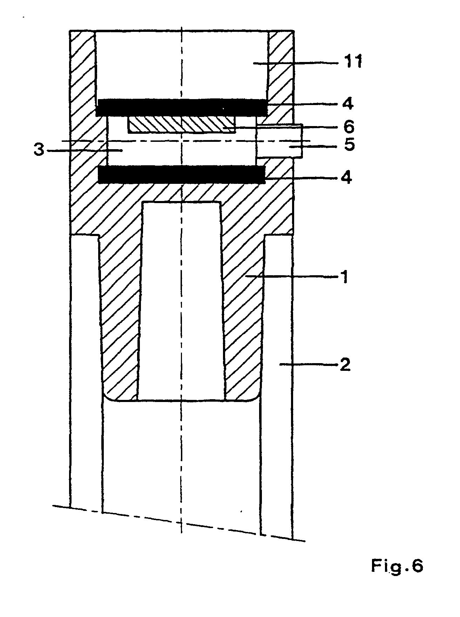

In Figur 6 ist ein Probennehmer mit einer andersartigen Halterung dargestellt. Der feuerfeste Körper 1 ist dafür in das Papprohr 2 teilweise hineingesteckt. Der feuerfeste Körper 1 weist nur eine scheibenförmige Probennahmekammer 3 auf, es ist jedoch auch möglich, bei der in Figur 6 gezeigten Halterung eine zweite Probennahmekammer 3;10 in dem feuerfesten Körper 1 anzuordnen. Ebenso ist es möglich, Probennehmer mit der in den Figuren 1 bis 5 gezeigten Halterung des Papprohres 2 mit nur einer Probennahmekammer 3 und ohne die zusätzliche Probennahmekammer 10 (oder eine andersartige Probennahmekammer) auszubilden.

## Patentansprüche

1. Probennehmer für Metallschmelzen, insbesondere für Gußeisen- oder Roheisenschmelzen, mit einer in einem feuerfesten, an einem Träger (2) gehalterten Körper (1) angeordneten Probennahmekammer (3), die an zwei gegenüberliegenden Wänden von je einer metallischen Kühlplatte (4) begrenzt ist und an einer weiteren Wand mindestens eine Einlauföffnung (5) für Metallschmelze aufweist, **dadurch gekennzeichnet, daß** im Innenraum der Probennahmekammer (3) auf mindestens einer der beiden metallischen Kühlplatten (4) eine weitere Metallscheibe (6) lösbar angeordnet ist, deren Durchmesser kleiner ist als der Durchmesser der Probennahmekammer (3) und deren Dicke kleiner ist als die Dicke der Probennahmekammer (3).

2. Probennehmer nach Anspruch 1, **dadurch gekennzeichnet, daß** die Metallscheibe (6) konzentrisch in einer kreisförmigen Probennahmekammer (3) angeordnet ist.

3. Probennehmer nach Anspruch 1 oder 2, **dadurch gekennzeichnet, daß** die nicht von metallischen Kühlplatten (4) begrenzten Wände der Probennahmekammer (3) während der Probennahme eine gasdurchlässige Struktur aufweisen.

4. Probennehmer nach einem der Ansprüche 1 bis 3, **dadurch gekennzeichnet, daß** die Metallscheibe (6) aus Kupfer, Eisen oder Stahl gebildet ist.

5. Probennehmer nach einem der Ansprüche 1 bis 4, **dadurch gekennzeichnet, daß** die Dikke der Metallscheibe (6) etwa 3 - 5 mm geringer ist als die Dicke der Probennahmekammer (3).

6. Probennehmer nach einem der Ansprüche 1 bis 5, **dadurch gekennzeichnet, daß** die Metallscheibe (6) an ihrem dem Inneren der Probennahmekammer (3) zugewandten Rand eine Schräge (7) aufweist.

7. Probennehmer nach einem der Ansprüche 1 bis 5, **dadurch gekennzeichnet, daß** die Metallscheibe (6) an ihrem dem Inneren der Probennahmekammer (3) zugewandten Rand eine Rundung (8) aufweist.

8. Probennehmer nach einem der Ansprüche 1 bis 7, **dadurch gekennzeichnet, daß** die Metallscheibe (6) an ihrem an die Wand der Probennahmekammer (3) angrenzenden Rand eine Hinterschneidung (9) aufweist.

9. Probennehmer nach einem der Ansprüche 1 bis 8, **dadurch gekennzeichnet, daß** der Körper (1) eine weitere Probennahmekammer (10) aufweist.

## Claims

1. Sampling device for molten metals, especially for molten cast iron or pig iron, with a sampling chamber (3) arranged in a refractory body (1) mounted on a carrier (2), the sampling chamber (3) being bounded by a metal chilling disk (4) on each of two opposite walls and having at least one inlet opening (5) for molten metal on a further wall, **characterized in that** in the interior of the sampling chamber (3) a further metal disk (6), whose diameter is smaller than the diameter of the sampling chamber (3) and whose thickness is smaller than the thickness of the sampling chamber (3), is detachably arranged on at least one of the two metal chilling disks (4).

2. Sampling device according to Claim 1, **characterized in that** the metal disk (6) is concentrically arranged in a circular sampling chamber (3).

3. Sampling device according to Claim 1 or Claim 2, **characterized in that** the walls of the sampling chamber (3) not bounded by metal chilling disks (4) have a gas-permeable structure during sampling.

4. Sampling device according to any one of Claims 1 to 3, **characterized in that** the metal disk (6) is made of copper, iron or steel.

5. Sampling device according to any one of Claims 1 to 4, **characterized in that** the thickness of the metal disk (6) is about 3 to 5 mm less than the thickness of the sampling chamber (3).

6. Sampling device according to any one of Claims 1 to 5, **characterized in that** the metal disk (6) has a bevel (7) on its rim facing the interior of the sampling chamber (3).

7. Sampling device according to any one of Claims 1 to 5, **characterized in that** the metal disk (6) has a rounding (8) on its rim facing the interior of the sampling chamber (3).

8. Sampling device according to any one of Claims 1 to 7, **characterized in that** the metal disk (6) has an undercut (9) on its rim adjoining the wall of the sampling chamber (3).

9. Sampling device according to any one of Claims 1 to 8, **characterized in that** the body (1) has a further sampling chamber (10).

## Revendications

1. Dispositif de prise d'échantillon pour métal en fusion, en particulier pour de la fonte de moulage ou pour de la fonte brute en fusion, comportant une chambre de prise d'échantillon (3) agencée dans un corps (1) réfractaire retenu dans un support (2), qui est limitée sur deux parois opposées par une plaque de refroidissement (4) métallique respective et qui présente sur une autre paroi au moins un orifice d'entrée (5) pour le métal en fusion, **caractérisé en ce qu'**à l'intérieur de la chambre (3) de prise d'échantillon, un autre disque métallique (6) est agencé de manière détachable sur au moins une des deux plaques de refroidissement (4) métalliques, dont le diamètre est inférieur au diamètre de la chambre de prise d'échantillon (3) et dont l'épaisseur est inférieure à l'épaisseur de la chambre de prise d'échantillon (3).

2. Dispositif de prise d'échantillon selon la revendication 1, **caractérisé en ce que** le disque métallique (6) est agencé de manière concentrique dans une chambre de prise d'échantillon (3) circulaire.

3. Dispositif de prise d'échantillon selon l'une ou l'autre des revendications 1 et 2, **caractérisé en ce que** les parois de la chambre de prise d'échantillon (3), qui ne sont pas limitées par les plaques de refroidissement (4) métalliques, présentent une structure perméable au gaz pendant la prise d'échantillon.

4. Dispositif de prise d'échantillon selon l'une des revendications 1 à 3, **caractérisé en ce que** le disque métallique (6) est en cuivre, en fer ou en acier.

5. Dispositif de prise d'échantillon selon l'une des revendications 1 à 4, **caractérisé en ce que** l'épaisseur du disque métallique (6) est approximativement de 3 à 5 mm plus faible que l'épaisseur de la chambre de prise d'échantillon (3).

6. Dispositif de prise d'échantillon selon l'une des revendications 1 à 5, **caractérisé en ce que** sur son bord tourné vers l'intérieur de la chambre de prise d'échantillon (3), le disque métallique (6) présente un biais (7).

7. Dispositif de prise d'échantillon selon l'une des revendications 1 à 5, **caractérisé en ce que** sur son bord tourné vers l'intérieur de la chambre de prise d'échantillon (3), le disque métallique (6) présente un arrondi (8).

8. Dispositif de prise d'échantillon selon l'une des revendications 1 à 7, **caractérisé en ce que** sur son bord tourné vers l'intérieur de la chambre de prise d'échantillon (3), le disque métallique (6) présente une contre-dépouille (9).

9. Dispositif de prise d'échantillon selon l'une des revendications 1 à 8, **caractérisé en ce que** le corps (1) présente une autre chambre de prise d'échantillon (10).
